(19) **Europäisches Patentamt**
**European Patent Office**
**Office européen des brevets**

(11) **EP 4 565 462 B1**

(12) **EUROPÄISCHE PATENTSCHRIFT**

(45) Veröffentlichungstag und Bekanntmachung des Hinweises auf die Patenterteilung:
**24.06.2026 Patentblatt 2026/26**

(21) Anmeldenummer: **23744746.1**

(22) Anmeldetag: **19.07.2023**

(51) Internationale Patentklassifikation (IPC):
*B60T 8/32* (2006.01)   *B62L 3/02* (2006.01)
*B62M 6/50* (2010.01)   *B60T 13/58* (2006.01)
*B60T 8/17* (2006.01)   *B62M 6/45* (2010.01)
*B60T 7/10* (2006.01)

(52) Gemeinsame Patentklassifikation (CPC):
**B60T 13/586; B60T 7/102; B60T 8/1706;**
**B60T 8/261; B60T 8/3225; B60T 11/06;**
**B60T 13/588; B62L 3/023; B62L 3/026;** B62M 6/45

(86) Internationale Anmeldenummer:
**PCT/EP2023/070024**

(87) Internationale Veröffentlichungsnummer:
**WO 2024/028112 (08.02.2024 Gazette 2024/06)**

(54) **HYDRAULISCHES BREMSSYSTEM EINES ZWEIRADS**

HYDRAULIC BRAKE SYSTEM OF A TWO-WHEELED VEHICLE

SYSTÈME DE FREINAGE HYDRAULIQUE DE VÉHICULE À DEUX ROUES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.08.2022 DE 102022207994**

(43) Veröffentlichungstag der Anmeldung:
**11.06.2025 Patentblatt 2025/24**

(73) Patentinhaber: **Robert Bosch GmbH**
**70442 Stuttgart (DE)**

(72) Erfinder:
• **KLUG, Silas**
**71106 Magstadt (DE)**
• **MOIA, Alessandro**
**71088 Holzgerlingen (DE)**

(56) Entgegenhaltungen:
EP-A1- 3 162 646       EP-A1- 3 753 835
EP-A1- 3 789 256       WO-A1-2019/155371
DE-A1- 102013 217 254   DE-A1- 102021 129 246

**Beschreibung**

Stand der Technik

Die vorliegende Erfindung betrifft ein hydraulisches Bremssystem, ein Zweirad, ein Verfahren zum Betreiben eines hydraulischen Bremssystems, und ein Verfahren zum Betreiben eines Zweirads.

Bekannt sind hydraulische Bremssysteme mit Antiblockiersystemen, welche durch eine Druckmodulation eines hydraulischen Bremsdrucks im System ein Blockieren von Rädern des Fahrzeugs verhindern oder verringern sollen. Beispielsweise weist eine solche Antiblockiereinheit eine Speicherkammer auf, in die Bremsflüssigkeit während eines Antiblockierbetriebs ein- und ausströmen kann. Häufig ist dabei eine Pumpe zwischen einem per Hand betätigten Bremszylinder und der Speicherkammer angeordnet. Um eine Druckmodulation an einem Bremssattel zu ermöglichen, sind dabei zusätzliche Ventile zum Absperren von Teilen der Bremsleitung erforderlich. Insbesondere im Falle von Zweirädern stellen übliche Hydraulische Bremssysteme einen erheblichen Kostenfaktor dar und führen aufgrund komplexer Konstruktionen häufig zu einem hohen Gewicht.

Aus WO 2019/155371 A1 ist beispielsweise ein hydraulisches Bremssystem für ein Zweirad bekannt, das eine Speicherkammer mit einem verschiebbaren Kolben offenbart. Ein erster Leitungsabschnitt verbindet einen Bremszylinder mit einem ersten Kammervolumen, während ein zweiter Leitungsabschnitt einen Bremssattel mit einem zweiten Kammervolumen verbindet. Eine Bypassleitung verbindet die beiden Leitungsabschnitte miteinander. DE 10 2021 129246 A1 zeigt ebenfalls ein Bremssystem, bei dem ein Druckdetektor zur Erfassung eines Fluiddrucks im Bremsgerät vorgesehen ist.

Offenbarung der Erfindung

Das erfindungsgemäße hydraulische Bremssystem mit den Merkmalen des Anspruchs 1 zeichnet sich demgegenüber durch eine besonders einfache und kostengünstige Konstruktion aus. Bei der Anwendung können zudem besonders vorteilhafte Bremsfunktionen ermöglicht werden, wie beispielsweise eine Gradientenkontrolle des Bremsdrucks. Dies wird erreicht durch ein hydraulisches Bremssystem eines Zweirads, vorzugsweise eines Fahrrads, besonders

Bremssattel abgebaut und/oder gezielt moduliert werden. Durch den, vorzugsweise genau einen einzigen, Drucksensor kann dabei einer der beiden Drücke, nämlich Zylinderdruck oder Satteldruck, direkt erfasst werden. Zur Erfassung des Zylinderdrucks ist der Drucksensor beispielsweise eingerichtet zur direkten Druckerfassung eines Fluiddrucks im ersten Leitungsabschnitt. In diesem Fall wird mittels der Steuereinheit der Satteldruck basierend auf dem erfassten Zylinderdruck und den vorbekannten mechanischen und geometrischen Eigenschaften des hydraulischen Bremssystems ermittelt. Analog kann der Drucksensor zur direkten Erfassung des Satteldrucks eingerichtet sein, zur direkten Druckerfassung eines Fluiddrucks im zweiten Leitungsabschnitt, wobei in diesem Fall mittels der Steuereinheit der Zylinderdruck basierend auf dem erfassten Satteldruck und den vorbekannten mechanischen und geometrischen Eigenschaften des hydraulischen Bremssystems ermittelt wird.

Als vorbekannte mechanische und geometrische Eigenschaften des hydraulischen Bremssystems werden dabei insbesondere für Kräfte und Drücke in dem Hydraulisches Bremssystem relevante Eigenschaften, wie beispielsweise ein Kolbendurchmesser des Kolbens, der eine für den Fluiddruck relevante hydraulische Fläche definiert, angesehen.

Das hydraulische Bremssystem bietet somit den Vorteil einer besonders einfachen und kostengünstigen Konstruktion, insbesondere da nur ein einziger Drucksensor notwendig ist. Dabei kann durch den speziellen Aufbau dennoch eine besonders präzise und zuverlässig genaue Erfassung von Fluiddrücken sowohl auf der Seite des Bremszylinders, als auch auf der Seite des Bremssattels erfolgen. Zudem können durch das hydraulische Bremssystem weitere vorteilhafte Funktionen umgesetzt werden durch die Betätigbarkeit des Kolbens. So kann beispielsweise eine gezielte Beeinflussung eines Bremsdruckgradienten bei der Bremsbetätigung erfolgen.

Die Unteransprüche haben bevorzugte Weiterbildungen der Erfindung zum Inhalt.

Bevorzugt umfasst der Aktuator einen Motor und einen Spindelantrieb. Insbesondere treibt der Motor dabei mittels des Spindelantriebs den, insbesondere linear, verschiebbaren Kolben an. Damit kann ein besonders einfacher und kostengünstiger Aufbau, der eine präzise Bewegung des Kolbens erlaubt, bereitgestellt werden.

Besonders bevorzugt ist die Steuereinheit eingerichtet, den Zylinderdruck $p_{MC}$ oder den Satteldruck $p_{MC}$ basierend auf folgender Gleichung zu ermitteln: $J\dot{\omega} = p_{MC} A i - p_{WC} A i + M$. Dabei ist A eine Kolbenfläche des Kolbens, insbesondere auf welche ein Fluiddruck der Bremsflüssigkeit wirkt, i eine Spindelübersetzung des Spindelantriebes, $\dot{\omega}$ eine Winkelgeschwindigkeit des Motors, insbesondere während eines Betriebs des Motors, J eine vorbekannte Motorträgheit des Motors, und M ein Motormoment des Motors, insbesondere während des Betriebs des Motors. Vorzugsweise werden die Winkelgeschwindigkeit und das Motormoment des Motors während eines Betriebs des Motors mittels eines entsprechenden Sensors erfasst und/oder basierend auf beispielsweise einem Betriebsstrom des Motors ermittelt. Die weiteren Parameter der oben genannten Gleichung sind vorbekannte, und insbesondere konstante, Kennwerte. Einer der beiden Drücke Zylinderdruck oder Satteldruck wird dabei mittels des Drucksensors direkt erfasst, wobei der andere Druck basierend auf einem Lösen der oben genannten Gleichung ermittelt wird. Somit wird eine einfache und kostengünstige Möglichkeit bereitgestellt, um mittels eines einzigen Drucksensors die Fluiddrücke sowohl Bremssattel-seitig als auch Bremszylinder-seitig präzise ermitteln zu können.

Vorzugsweise ist der Kolben in einem Normal-Bremsbetrieb derart innerhalb der Speicherkammer angeordnet, dass das zweite Kammervolumen gleich Null ist. Als Normal-Bremsbetrieb wird ein Betriebszustand des hydraulischen Bremssystems angesehen, in welchem eine, insbesondere unmittelbar übertragbare, Bremsbetätigung, vorzugsweise ausschließlich, durch den Fahrer möglich ist. Insbesondere liegt der Kolben dabei in dem Normal-Bremsbetrieb an einer Sattelseitigen Wand der Speicherkammer an. Dadurch kann sich der Kolben bei einer Druckerhöhung von einem Bremszylinder ausgehend, also im ersten Leitungsabschnitt, nicht über die Speicherkammer zum Bremssattel auswirken. Stattdessen erfolgt die Übertragung des Bremsdrucks insbesondere über die Bypassleitung. Somit kann auf einfache Weise ein hydraulisches Bremssystem mit besonders vielfältigen Möglichkeiten der Anpassung der Bremsbetätigung bereitgestellt werden. Vorzugsweise kann dabei zur Umsetzung eines Antiblockier-Betriebs, das heißt, wenn ein Blockieren eines Rads des Fahrzeugs beginnt oder unmittelbar bevorsteht, ein Druck am Bremssattel abgebaut werden, indem durch entsprechendes Verschieben des Kolbens mittels des Aktuators das zweite Kammervolumen erhöht wird, sodass Bremsflüssigkeit in das zweite Kammervolumen einströmt.

Besonders bevorzugt ist das Ventil, das in die Bypassleitung integriert ist, im Normal-Bremsbetrieb geöffnet. Dadurch kann ein Bremsdruck ausgehend vom Bremszylinder über die Bypassleitung direkt an den Bremssattel weitergegeben werden. Insbesondere ist das Ventil dabei als stromlos offenes Ventil ausgebildet, um einen besonders einfachen und kostengünstigen Betrieb des hydraulischen Bremssystems zu ermöglichen.

Weiter bevorzugt umfasst die Bypassleitung eine Rückschlageinrichtung, welche das Ventil in der Bypassleitung umgeht. Die Rückschlageinrichtung gibt dabei eine Fluidströmung in Richtung vom zweiten Leitungsabschnitt zum ersten Leitungsabschnitt frei und blockiert eine Fluidströmung in entgegengesetzter Richtung. Insbesondere kann somit während eines Antiblockier-Betriebs, und beispielsweise wenn der Fahrer des Fahrzeugs einen Bremshebel loslässt, das heißt wenn ein Bremsdruck am Bremszylinder verringert wird, ermöglicht werden, dass Bremsdruck im zweiten Leitungsabschnitt abgebaut wird.

Vorzugsweise umfass das hydraulische Bremssystem ferner einen Bremszylinder, der in Fluidverbindung mit dem ersten Leitungsabschnitt steht, und einen Bremssattel der in Fluidverbindung mit dem zweiten Leitungsabschnitt steht. Das hydraulische Bremssystem zeichnet sich somit durch einen besonders einfachen und kostengünstigen Aufbau mit wenigen Bauteilen und geringem Gewicht aus, wobei zuverlässig verschiedene vorteilhafte Bremsfunktionen umgesetzt werden können.

Ferner betrifft die Erfindung ein Zweirad, insbesondere ein Fahrrad, bevorzugt ein Elektrofahrrad, das das beschriebene hydraulische Bremssystem umfasst. Insbesondere beim Einsatz an einem Elektrofahrrad zeichnet sich das hydraulische Bremssystem durch einen besonders einfachen kostengünstigen Einbau bei geringem notwendigen Platzangebot aus.

Weiterhin führt die Erfindung zu einem Verfahren zum Betreiben eines hydraulischen Bremssystems, insbesondere des oben beschriebenen hydraulischen Bremssystems. Das Verfahren umfasst die Schritte:

- Erfassen des Zylinderdrucks oder des Satteldrucks mittels des Drucksensors, und
- Ermitteln des jeweils anderen Drucks, also des Satteldrucks bzw. Zylinderdrucks, basierend auf dem entsprechenden mittels des Drucksensors erfassten Drucks, also Zylinderdruck bzw. Satteldruck, sowie basierend auf vorbekannten mechanischen und/oder geometrischen Eigenschaften des hydraulischen Bremssystems.

Das Verfahren bietet somit die Möglichkeit, auf einfache und effiziente Weise mittels nur genau einem Drucksensor sowohl den Zylinderdruck als auch den Satteldruck zu bestimmen, um einen besonders präzisen und flexiblen Betrieb des hydraulischen Bremssystems zu ermöglichen.

Bevorzugt umfasst das Verfahren ferner den Schritt: Durchführen eines Antiblockier-Betriebs durch Schließen des Ventils in der Bypassleitung und, insbesondere während das Ventil geschlossen ist, Betätigen des Kolbens mittels des Aktuators. Das heißt, durch das Schließen des Ventils in der Bypassleitung wird der Fahrer hydraulisch vom Bremssattel getrennt. Damit kann durch Bewegen des Kolbens mittels des Aktuators, insbesondere derart, dass das zweite Kammervolumen vergrößert wird, Bremsflüssigkeit vom Bremssattel in das zweite Kammervolumen einströmen, sodass der Bremsdruck am Bremssattel reduziert wird. Anschließend kann der Bremsdruck vorzugsweise durch entgegengesetztes Verschieben des Kolbens wieder erhöht werden. Damit kann auf besonders einfache und effektive Weise ein Antiblockier-Betrieb bei dem Verfahren bereitgestellt werden.

Besonders bevorzugt umfasst das Verfahren ferner den Schritt: gesteuertes Drosseln des Ventils in der Bypassleitung während einer Bremsbetätigung durch einen Fahrer des Zweirads. Vorzugsweise erfolgt das gesteuerte Drosseln während des Normal-Bremsbetriebs. Dadurch erfolgt eine gesteuerte Begrenzung eines Bremsdruck-Aufbau-Gradienten. Mit anderen Worten wird ein Druckaufbau, insbesondere durch Beeinflussung einer Bremsflüssigkeits-Strömung vom Bremszylinder zum Bremssattel, mittels einer gesteuerten Betätigung des Ventils gezielt beeinflusst. Beispielsweise kann dadurch ein Gradient des Bremsdruckaufbaus, sowie beispielsweise auch ein maximaler Bremsdruck, gezielt gesteuert beeinflusst werden. Dadurch kann ein für den Fahrer besonders komfortabler Fahrbetrieb des Zweirads bereitgestellt werden, da Bremsvorgänge erleichtert werden können. Beispielsweise kann zudem ein Überbremsen durch den Fahrer damit verhindert werden.

Ferner betrifft die Erfindung ein Verfahren zum Betreiben eines Zweirads, insbesondere eines Fahrrads, bevorzugt eines Elektrofahrrads. Das Zweirad umfasst eine Antriebseinheit, insbesondere welche eingerichtet ist, um das Zweirad mittels eines Motordrehmoments anzutreiben, und das oben beschriebene hydraulische Bremssystem. Das Verfahren zum Betreiben des Zweirads umfasst dabei die Schritte:

- Erzeugen eines Motorbremsmoments mittels der Antriebseinheit, und
- gleichzeitiges Erzeugen eines Bremsmoments mittels des hydraulischen Bremssystems, insbesondere durch gesteuertes Betätigen des Kolbens. Insbesondere wird das Motorbremsmoment dabei durch einen generatorischen Betrieb der Antriebseinheit erzeugt. Vorzugsweise kann hierbei, insbesondere wenn es sich bei der Antriebseinheit um einen Elektromotor handelt, ein durch den generatorischen Betrieb der Antriebseinheit erzeugter Strom in einen elektrischen Energiespeicher des Zweirads eingespeichert werden. Ein derartiger Betrieb wird auch als Rekuperation bezeichnet. Damit kann ein besonders effizienter Betrieb des Zweirads bereitgestellt werden, da beispielsweise ein hoher Anteil an kinetischer Energie beim Verzögern des Zweirads durch die Rekuperation wiedergewonnen werden kann.

Bevorzugt umfasst das Verfahren ferner die Schritte:

- Ermitteln einer Soll-Verzögerung des Zweirads basierend auf dem ermittelten, oder erfassten, Zylinderdruck, und
- Ermitteln einer maximalen Motor-Verzögerung durch das Motorbremsmoment. Das Erzeugen des Bremsmoments mittels des hydraulischen Bremssystems erfolgt dabei nur dann, wenn die Soll-Verzögerung größer als die maximale Motor-Verzögerung ist. Besonders bevorzugt wird dabei ein möglichst großer Anteil der Soll-Verzögerung durch die Motor-Verzögerung aufgewendet, um einen hohen Anteil an rekuperativ zurückgewonnener Energie bereitstellen zu können.

Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

Figur 1 eine vereinfachte schematische Ansicht eines Elektrofahrrads gemäß einem bevorzugten Ausführungsbeispiel der Erfindung, und

Figur 2 eine vereinfachte schematische Ansicht eines hydraulischen Bremssystems des Elektrofahrrads der Figur 1.

Bevorzugte Ausführungsformen der Erfindung

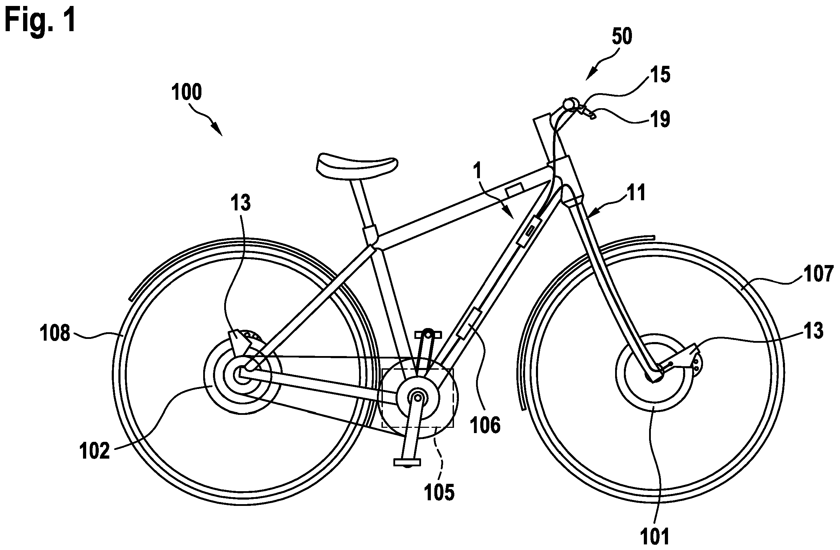

Figur 1 zeigt eine vereinfachte schematische Ansicht eines Elektrofahrrads 100 gemäß einem bevorzugten Ausführungsbeispiel der Erfindung. Das Elektrofahrrad 100 umfasst eine Antriebseinheit 105, welche eingerichtet ist, eine Tretkraft eines Fahrers mittels Motorkraft zu unterstützen. Die Antriebseinheit 105 wird von einem elektrischen Energiespeicher 106 mit elektrischer Energie versorgt.

Das Elektrofahrrad 100 umfasst ein hydraulisches Bremssystem 50 mittels welchem Bremsen 101, 102 jeweils an einem Vorderrad 107 bzw. einem Hinterrad 108 des Elektrofahrrads 100 betätigt werden können. Das hydraulische Bremssystem 50 umfasst pro Bremse 101, 102 jeweils einen Bremshebel 19, einen Bremszylinder 15, und einen Bremssattel 13.

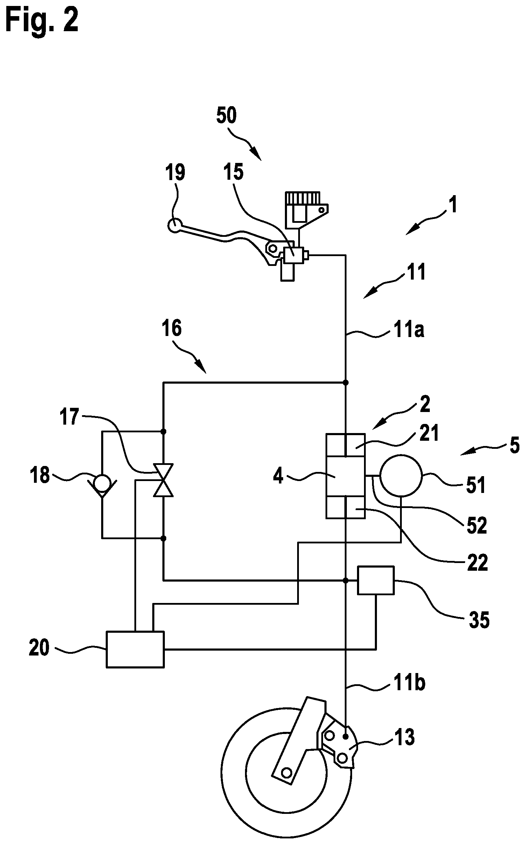

Das hydraulische Bremssystem 50 ist in Figur 2 detaillierter dargestellt und wird nachfolgend beschrieben. Die Beschreibung erfolgt dabei aus Gründen der Einfachheit nur in Bezug auf eine einzelne Bremse 101, insbesondere des Vorderrads 107.

Das hydraulische Bremssystem 50 umfasst eine Bremsleitung 11, welche einen ersten Leitungsabschnitt 11a und einen zweiten Leitungsabschnitt 11b aufweist.

Der erste Leitungsabschnitt 11a ist mit dem Bremszylinder 15 verbunden, und der zweite Leitungsabschnitt 11b ist mit dem Bremssattel 13 verbunden.

In die Bremsleitung 11 ist eine Speicherkammer 2 zur Aufnahme von Bremsflüssigkeit integriert. Innerhalb der Speicherkammer 2 ist ein Kolben 4 verschiebbar angeordnet. Der Kolben 4 trennt dabei ein erstes Kammervolumen 21 fluidisch von einem zweiten Kammervolumen 22. Das erste Kammervolumen 21 steht in Fluidverbindung mit dem ersten Leitungsabschnitt 11a. Das zweite Kammervolumen 22 steht in Fluidverbindung mit dem zweiten Leitungsabschnitt 11b.

Der Kolben 4 ist dabei mittels eines Aktuators 5 verschiebbar. Der Aktuator 5 umfasst einen Motor 51, beispielsweise einen Elektromotor, und einen Spindelantrieb 52, der den Motor 51 und den Kolben 4 verbindet. Insbesondere wird mittels des Spindelantriebs 52 eine durch den Motor 51 erzeugte rotatorische Bewegung in eine translatorische Bewegung des Kolbens 4 umgewandelt.

Ferner umfasst das hydraulische Bremssystem 50 eine Bypassleitung 16, welche den ersten Leitungsabschnitt 11a und den zweiten Leitungsabschnitt 11b miteinander verbindet. Insbesondere stellt die Bypassleitung 16 somit eine Fluidverbindung des ersten Leitungsabschnitts 11a, also dem Teil der Bremsleitung 11 zwischen Bremszylinder 15 und erstem Kammervolumen 21, mit dem zweiten Leitungsabschnitt 11b, also dem Teil der Bremsleitung 11 zwischen Bremssattel 13 und zweitem Kammervolumen 22, her. In die Bypassleitung 16 ist dabei ein steuerbar betätigbares Ventil 17 integriert, mittels welchem die Bypassleitung 16, das heißt die Fluidverbindung zwischen erstem Leitungsabschnitt 11a und zweitem Leitungsabschnitt 11b, freigegeben und blockiert werden kann.

Die Bypassleitung 16 umfasst ferner eine Rückschlageinrichtung 18, welche eine Umgehung des Ventils 17 für die Bremsflüssigkeit bereitstellt. Die Rückschlageinrichtung 18 erlaubt dabei eine Fluidströmung vom zweiten Leitungsabschnitt 11b zum ersten Leitungsabschnitt 11a und sperrt eine Fluidströmung in entgegengesetzter Richtung.

Das hydraulische Bremssystem 50 umfasst ferner einen einzigen Drucksensor 35, welcher in dem dargestellten bevorzugten Ausführungsbeispiel eingerichtet ist, um einen Satteldruck, das heißt einen Fluiddruck der Bremsflüssigkeit am Bremssattel 13, zu erfassen. Dabei ist der Drucksensor 35 eingerichtet zur Erfassung des Fluiddrucks innerhalb des zweiten Leitungsabschnitt 11b.

Außerdem umfasst das hydraulische Bremssystem 50 eine Steuereinheit 20. Die Steuereinheit 20 ist eingerichtet, um das Ventil 17 und den Aktuator 5 gesteuert zu betätigen. Zudem ist die Steuereinheit 20 eingerichtet, um den mittels des Drucksensors 35 erfassten Satteldruck zu empfangen.

Durch den speziellen konstruktiven Aufbau des hydraulischen Bremssystems 50 kann dabei ermöglicht werden, dass zusätzlich ein Zylinderdruck, das heißt ein Fluiddruck der Bremsflüssigkeit am Bremszylinder 15, ermittelt werden kann, insbesondere ohne dass ein zusätzlicher Drucksensor erforderlich ist. Hierfür erfolgt eine Berechnung des Zylinderdrucks mittels der Steuereinheit 20 basierend auf dem mittels des Drucksensors 35 erfassten Satteldruck und zusätzlich basierend auf vorbekannten mechanischen und geometrischen Eigenschaften des hydraulischen Bremssystems 1. Im Detail erfolgt eine Berechnung basierend auf den aktiven Kolbenflächen des Kolbens 4 an beiden Kammervolumina, einer Spindelübersetzung des Spindelantriebs 51, einer Winkelgeschwindigkeit des Motors 52, einer vorbekannten Motorträgheit des Motors 52, und einem Motormoment des Motors 52.

Das hydraulische Bremssystem 50 bietet somit den Vorteil eines besonders einfachen und kostengünstigen Aufbaus mit wenigen Komponenten, wobei jedoch eine Vielzahl an Funktionen und ein besonders zuverlässiger und präziser Betrieb ermöglicht werden kann. Die Betriebsweise des hydraulischen Bremssystems 50 wird nachfolgend näher beschrieben.

In einem Normal-Bremsbetrieb, in welchem manuell durch den Fahrer betätigte Bremsmanöver direkt, das heißt ohne Unterstützung und/oder Eingriff weiterer Systeme erfolgen sollen, ist das Ventil 17 geöffnet, und der Kolben 4 derart innerhalb der Speicherkammer 2 angeordnet, dass das zweite Kammervolumen 22 gleich Null ist. Das heißt, der Kolben 4 befindet sich in der in Figur 2 dargestellten Konfiguration an einem unteren Ende der Speicherkammer 2. Bei einer Betätigung des Bremshebels 19 wird dabei der am Bremszylinder 15 erzeugte Bremsdruck über die Bypassleitung 16 zum Bremssattel 13 übertragen.

Wird ein Blockieren eines Rades oder ein unmittelbar bevorstehendes Blockieren des Rades erkannt, beispielsweise mittels einer entsprechenden Erfassung mittels der Steuereinheit 20, so kann ein Antiblockier-Betrieb durchgeführt werden. Dabei wird das Ventil 17 geschlossen, sodass der Bremszylinder 15 hydraulisch vom Bremssattel 13 getrennt wird. Bei geschlossenem Ventil 17 wird mittels des Aktuators 5 aktuiert der Kolben 4 derart innerhalb der Speicherkammer 2 bewegt, dass das zweite Kammervolumen 22 vergrößert wird. Dadurch kann Bremsflüssigkeit aus dem Bremssattel-seitigen Teil der Bremsleitung 11 in das zweite Kammervolumen 22 einströmen, sodass der Bremsdruck am Bremssattel 13 verringert wird. Durch entgegengesetztes Verschieben des Kolbens 4 kann der Bremsdruck anschließend auch wieder erhöht werden. Das heißt, durch das gesteuerte Verschieben des Kolbens 4 mittels des Aktuators 5 kann der Bremsdruck am Bremssattel 13 moduliert werden.

Wenn der Fahrer während des Antiblockier-Betriebs den Bremshebel 19 loslässt, das heißt der Bremsdruck am Bremszylinder 15 signifikant sinkt, kann über die Rückschlageinrichtung 18 der Bremsdruck Bremssattel-seitig abgebaut werden.

Ferner erlaubt das hydraulische Bremssystem 50 eine Gradientenkontrolle des beim Bremsen manuell erzeugten Bremsdrucks. Im Detail kann durch ein gesteuertes Drosseln des Ventils 17 in der Bypassleitung 16 während einer Bremsbetätigung durch den Fahrer während des Normal-Bremsbetriebs ein Bremsdruck-Aufbau-Gradient gesteuert begrenzt werden. Das heißt, durch das gesteuerte Drosseln des Ventils 17 kann bei einer plötzlichen sehr starken Bremshebelbetätigung durch den Fahrer der Gradient des Bremsdrucks, insbesondere am Bremssattel 13, gezielt beeinflusst, beispielsweise reduziert, werden, um einen optimierten Bremsvorgang bereitzustellen.

Zusätzlich erlaubt das hydraulische Bremssystem 50 allgemein eine gesteuert beeinflussbare Übertragung des manuell am Bremszylinder 15 erzeugten Bremsdrucks zum Bremssattel 13. Dabei kann beispielsweise durch gezieltes gesteuertes Betätigen des Ventils 17 und/oder durch eine gezielte gesteuerte Betätigung des Kolbens 4 der Bremsdruck am Bremssattel 13 geregelt werden, insbesondere unabhängig von dem Bremsdruck am Bremszylinder 15.

Dadurch kann die mittels des hydraulischen Bremssystems 50 erzeugbare Verzögerung des Elektrofahrrads 100 gesteuert angepasst werden. Dies ist besonders vorteilhaft in einem Fahrbetrieb des Elektrofahrrads 100, in welchem eine Verblendung eines Bremsmoments des hydraulischen Bremssystems 50 und eines Motorbremsmoments erfolgen soll. Ein solches Motorbremsmoment kann durch einen gezielten generatorischen Betrieb der Antriebseinheit 105 erzeugt werden. Hierbei kann ein durch den generatorischen Betrieb erzeugter Strom beispielsweise in den elektrischen Energiespeicher 106 eingespeichert werden. Ein derartiger Betrieb des Elektrofahrrads 100 wird auch als rekuperativer Betrieb bezeichnet.

Das Elektrofahrrad 100 kann dabei derart betrieben werden, dass ein möglichst großes Rekuperationspotenzial genutzt wird. Hierbei erfolgt bei einer Bremsbetätigung durch den Fahrer zunächst ein Ermitteln einer Soll-Verzögerung des Elektrofahrrads 100 basierend auf dem ermittelten Zylinderdruck. Gleichzeitig erfolgt ein Ermitteln einer maximalen Motor-Verzögerung durch das Motorbremsmoment, das die Antriebseinheit 105 bereitstellen kann. Wenn die ermittelte Soll-Vergrößerung kleiner oder gleich der maximalen Motor-Verzögerung ist, so wird am Bremssattel 13 gar kein Bremsdruck durch das hydraulische Bremssystem 50 erzeugt. Stattdessen erfolgt die Verzögerung des Elektrofahrrads 100 bevorzugt ausschließlich mittels des Motorbremsmoments. Ist die Soll-Vergrößerung größer als die maximale Motor-Verzögerung, so wird ein möglichst großer Anteil der Soll-Vergrößerung durch das Motorbremsmoment herbeigeführt, wobei der restliche Anteil durch ein gesteuertes Erzeugen eines zusätzlichen Bremsmoments mittels des hydraulischen Bremssystems 50 erzeugt wird. Dadurch kann ein besonders effizienter Betrieb des Elektrofahrrads 100 mit maximaler Ausnutzung des Rekuperationspotenzials ermöglicht werden.

Im dargestellten und beschriebenen Ausführungsbeispiel ist der Drucksensor 35 eingerichtet zur Erfassung des Satteldrucks am Bremssattel 13, insbesondere indem der Drucksensor 35 am zweiten Leitungsabschnitt 11b angeordnet ist. Alternativ bevorzugt kann der Drucksensor 35 auch eingerichtet sein, um den Zylinderdruck am Bremszylinder 15 zu erfassen, insbesondere indem der Drucksensor 35 am ersten Leitungsabschnitt 11a angeordnet ist. In diesem Fall wird der Satteldruck am Bremssattel 13 bzw. im zweiten Leitungsabschnitt 11b analog der oben beschriebenen Berechnung mittels der Steuereinheit 20 von dieser berechnet.

**Patentansprüche**

1. Hydraulisches Bremssystem eines Zweirads (100), insbesondere eines Fahrrads, vorzugsweise eines Elektrofahrrads, umfassend:

   - eine Speicherkammer (2) zur Aufnahme einer Bremsflüssigkeit,

   - einen Kolben (4), der innerhalb der Speicherkammer (2) verschiebbar ist und ein erstes Kammervolumen (21) von einem zweiten Kammervolumen (22) trennt,
   - einen Aktuator (5), der eingerichtet ist, zum steuerbar betätigbaren Verschieben des Kolbens (4) innerhalb der Speicherkammer (2),
   - eine Bremsleitung (11), welche einen ersten Leitungsabschnitt (11a) und einen zweiten Leitungsabschnitt (11b) aufweist,
   - wobei der erste Leitungsabschnitt (11a) mit dem ersten Kammervolumen (21) in Fluidverbindung steht und eingerichtet ist zur Verbindung mit einem Bremszylinder (15),
   - wobei der zweite Leitungsabschnitt (11b) mit dem zweiten Kammervolumen (22) in Fluidverbindung steht und eingerichtet ist zur Verbindung mit einem Bremssattel (13),
   - eine Bypassleitung (16), welche den ersten Leitungsabschnitt (11a) und den zweiten Leitungsabschnitt (11b) miteinander verbindet,

   **dadurch gekennzeichnet, dass** in die Bypassleitung (16) ein steuerbar betätigbares Ventil (17) integriert ist, und dass das Bremssystem aufweist:

   - einen Drucksensor (35), der eingerichtet ist zur Erfassung eines Zylinderdrucks am ersten Leitungsabschnitt (11a) oder eines Satteldrucks am zweiten Leitungsabschnitt (11b), und
   - eine Steuereinheit (20), welche eingerichtet ist, basierend auf dem mittels des Drucksensors (35) erfassten Zylinderdrucks oder Satteldrucks und vorbekannten mechanischen und/oder geometrischen Eigenschaften des hydraulischen Bremssystems (50) den jeweils anderen Druck zu ermitteln.

2. Hydraulisches Bremssystem nach Anspruch 1, wobei der Aktuator (5) einen Motor (51) und einen Spindelantrieb (52) umfasst.

3. Hydraulisches Bremssystem nach Anspruch 2, wobei die Steuereinheit (20) eingerichtet ist, den Zylinderdruck $p_{MC}$ oder den Satteldruck $p_{MC}$ basierend auf folgender Gleichung zu ermitteln:

$$J\dot{\omega} = p_{MC}\,A\,i - p_{WC}\,A\,i + M$$

mit einer Kolbenfläche A des Kolbens (4), einer Spindelübersetzung i des Spindelantriebs (52), einer Winkelgeschwindigkeit $\dot{\omega}$ des Motors (52), einer vorbekannten Motorträgheit J des Motors (52), und einem Motormoment M des Motors (52).

4. Hydraulisches Bremssystem nach einem der vorhergehenden Ansprüche, wobei der Kolben (4) in einem Normal-Bremsbetrieb derart innerhalb der Speicherkammer (2) angeordnet ist, dass das zweite Kammervolumen (22) gleich Null ist.

5. Hydraulisches Bremssystem nach einem der vorhergehenden Ansprüche, wobei das Ventil (17) im Normal-Bremsbetrieb geöffnet ist.

6. Hydraulisches Bremssystem nach einem der vorhergehenden Ansprüche, wobei die Bypassleitung (16) eine Rückschlageinrichtung (18) umfasst, welche das Ventil (17) umgeht, und welche in Richtung vom zweiten Leitungsabschnitt (11b) zum ersten Leitungsabschnitt (11a) eine Fluidströmung freigibt und in entgegengesetzter Richtung sperrt.

7. Hydraulisches Bremssystem nach einem der vorhergehenden Ansprüche, ferner umfassend:

    - einen Bremszylinder (15), der in Fluidverbindung mit dem ersten Leitungsabschnitt (11a) steht, und
    - einen Bremssattel (13), der in Fluidverbindung mit dem zweiten Leitungsabschnitt (11b) steht.

8. Zweirad, insbesondere Fahrrad, vorzugsweise Elektrofahrrad, umfassend ein hydraulisches Bremssystem (50) nach einem der vorhergehenden Ansprüche.

9. Verfahren zum Betreiben eines hydraulischen Bremssystems (50) nach einem der Ansprüche 1 bis 7, umfassend die Schritte:

    - Erfassen des Zylinderdrucks oder des Satteldrucks mittels des Drucksensors (35), und
    - Ermitteln des jeweils anderen Drucks basierend auf dem entsprechenden mittels des Drucksensors (35) erfassten Zylinderdruck oder Satteldruck und vorbekannten mechanischen und/oder geometrischen Eigenschaften des hydraulischen Bremssystems (50).

10. Verfahren nach Anspruch 9, ferner umfassend den Schritt:

    - Durchführen eines Antiblockier-Betriebs durch Schließen des Ventils (17) in der Bypassleitung (16) und Betätigen des Kolbens (4) mittels des Aktuators (5).

11. Verfahren nach Anspruch 9 oder 10, ferner umfassend den Schritt:

    - gesteuertes Drosseln des Ventils (17) in der Bypassleitung (16) während einer Bremsbetätigung durch einen Fahrer, insbesondere während des Normal-Bremsbetriebs, zur gesteuerten Begrenzung eines Bremsdruck-Aufbau-Gradienten.

12. Verfahren zum Betreiben eines Zweirads (100), insbesondere eines Fahrrads, vorzugsweise eines Elektrofahrrads, welches eine Antriebseinheit (105) und ein hydraulisches Bremssystem (50) nach einem der Ansprüche 1 bis 7 umfasst, umfassend die Schritte:

    - Erzeugen eines Motorbremsmoments mittels der Antriebseinheit (105), und
    - gleichzeitiges Erzeugen eines Bremsmoments mittels des hydraulischen Bremssystems (50).

13. Verfahren nach Anspruch 12, ferner umfassend die Schritte:

    - Ermitteln einer Soll-Verzögerung des Zweirads (100) basierend auf dem ermittelten Zylinderdruck, und
    - Ermitteln einer maximalen Motor-Verzögerung durch das Motorbremsmoment,
    - wobei das Erzeugen des Bremsmoments mittels des hydraulischen Bremssystems (50) nur erfolgt, wenn die Soll-Verzögerung größer als die maximale Motor-Verzögerung ist.

**Claims**

1. Hydraulic braking system of a two-wheeled vehicle (100), in particular a bicycle, preferably an electric bicycle, comprising:

    - a storage chamber (2) for holding a brake fluid,
    - a piston (4), which can be moved within the storage chamber (2) and separates a first chamber volume (21) from a second chamber volume (22),
    - an actuator (5), which is configured for the controllably actuable movement of the piston (4) within the storage chamber (2),
    - a brake line (11), which has a first line section (11a) and a second line section (11b),
    - wherein the first line section (11a) is in fluid communication with the first chamber volume (21) and is configured for connection to a brake cylinder (15),
    - wherein the second line section (11b) is in fluid communication with the second chamber volume (22) and is configured for connection to a brake caliper (13),
    - a bypass line (16), which connects the first line section (11a) and the second line section (11b) to one another,

    **characterized in that** a controllably actuable valve (17) is integrated into the bypass line (16), and **in that** the braking system comprises:

- a pressure sensor (35), which is configured to detect a cylinder pressure on the first line section (11a) or a caliper pressure on the second line section (11b), and
- a control unit (20), which is configured, on the basis of the cylinder pressure or caliper pressure detected by means of the pressure sensor (35) and previously known mechanical and/or geometric properties of the hydraulic braking system (50), to determine the respective other pressure.

2. Hydraulic braking system according to Claim 1, wherein the actuator (5) comprises a motor (51) and a spindle drive (52).

3. Hydraulic braking system according to Claim 2, wherein the control unit (20) is configured to determine the cylinder pressure $p_{MC}$ or the caliper pressure $p_{MC}$ on the basis of the following equation:

$$J\dot{\omega} = p_{MC}\, A\, i - p_{WC}\, A\, i + M$$

with a piston area A of the piston (4), a spindle ratio i of the spindle drive (52), an angular speed $\dot{\omega}$ of the motor (52), a previously known motor inertia J of the motor (52), and a motor torque M of the motor (52).

4. Hydraulic braking system according to any of the preceding claims, wherein, in a normal braking mode, the piston (4) is arranged within the storage chamber (2) in such a way that the second chamber volume (22) is equal to zero.

5. Hydraulic braking system according to any of the preceding claims, wherein the valve (17) is open in the normal braking mode.

6. Hydraulic braking system according to any of the preceding claims, wherein the bypass line (16) comprises a non-return device (18), which bypasses the valve (17) and which allows a fluid flow in the direction from the second line section (11b) to the first line section (11a) and blocks it in the opposite direction.

7. Hydraulic braking system according to any of the preceding claims, further comprising:

- a brake cylinder (15), which is in fluid communication with the first line section (11a), and
- a brake caliper (13), which is in fluid communication with the second line section (11b).

8. Two-wheeled vehicle, in particular bicycle, preferably electric bicycle, comprising a hydraulic braking system (50) according to any of the preceding claims.

9. Method for operating a hydraulic braking system (50) according to any of Claims 1 to 7, comprising the steps of:

- detecting the cylinder pressure or the caliper pressure by means of the pressure sensor (35), and
- determining the respective other pressure on the basis of the corresponding cylinder pressure or caliper pressure detected by means of the pressure sensor (35) and previously known mechanical and/or geometric properties of the hydraulic braking system (50).

10. Method according to Claim 9, further comprising the step of:

- carrying out an anti-lock mode by closing the valve (17) in the bypass line (16) and actuating the piston (4) by means of the actuator (5).

11. Method according to Claim 9 or 10, further comprising the step of:

- controlled restriction of the valve (17) in the bypass line (16) during brake actuation by a rider, in particular during the normal braking mode, for controlled limitation of a brake pressure build-up gradient.

12. Method for operating a two-wheeled vehicle (100), in particular a bicycle, preferably an electric bicycle, which comprises a drive unit (105) and a hydraulic braking system (50) according to any of Claims 1 to 7, comprising the steps of:

- generating a motor braking torque by means of the drive unit (105), and
- simultaneously generating a braking torque by means of the hydraulic braking system (50).

13. Method according to Claim 12, further comprising the steps of:

- determining a setpoint deceleration of the two-wheeled vehicle (100) on the basis of the determined cylinder pressure, and
- determining a maximum motor deceleration by the motor braking torque,
- wherein the braking torque is generated by means of the hydraulic braking system (50) only when the setpoint deceleration is greater than the maximum motor deceleration.

**Revendications**

1. Système de freinage hydraulique d'un véhicule à deux roues (100), en particulier d'une bicyclette, de préférence d'une bicyclette électrique, comprenant :

   - une chambre de stockage (2) destinée à recevoir un liquide de frein,
   - un piston (4) qui peut être déplacé à l'intérieur de la chambre de stockage (2) et sépare un premier volume de chambre (21) d'un deuxième volume de chambre (22),
   - un actionneur (5) qui est conçu pour le déplacement du piston (4) actionnable de manière commandable à l'intérieur de la chambre de stockage (2),
   - une conduite de frein (11), laquelle possède une première portion de conduite (11a) et une deuxième portion de conduite (11b),
   - la première portion de conduite (11a) étant en communication fluidique avec le premier volume de chambre (21) et étant conçue pour être reliée à un cylindre de frein (15),
   - la deuxième portion de conduite (11b) étant en communication fluidique avec le deuxième volume de chambre (22) et étant conçue pour être reliée à un étrier de frein (13),
   - une conduite de dérivation (16), laquelle relie la première portion de conduite (11a) et la deuxième portion de conduite (11b) l'une à l'autre,
   - **caractérisé en ce qu'**une vanne (17) actionnable de manière commandable est intégrée dans la conduite de dérivation (16) et **en ce que** le système de freinage possède :

     - un capteur de pression (35), qui est conçu pour détecter une pression de cylindre au niveau de la première portion de conduite (11a) ou une pression d'étrier au niveau de la deuxième portion de conduite (11b), et
     - une unité de commande (20), laquelle est conçue pour déterminer l'autre pression respective sur la base de la pression de cylindre ou la pression d'étrier détectée au moyen du capteur de pression (35) et des propriétés mécaniques et/ou géométriques préalablement connues du système de freinage hydraulique (50).

2. Système de freinage hydraulique selon la revendication 1, l'actionneur (5) comprenant un moteur (51) et un mécanisme d'entraînement à vis (52).

3. Système de freinage hydraulique selon la revendication 2, l'unité de commande (20) étant conçue pour déterminer la pression de cylindre $p_{MC}$ ou la pression d'étrier $p_{MC}$ sur la base de l'équation suivante :

$$J\dot{\omega} = p_{MC} A\,i - p_{WC} A\,i + M$$

avec une surface de piston A du piston (4), un rapport de transmission de vis i du mécanisme d'entraînement à vis (52), une vitesse angulaire $\dot{\omega}$ du moteur (52), une inertie de moteur J préalablement connue du moteur (52), et un couple de moteur M du moteur (52).

4. Système de freinage hydraulique selon l'une des revendications précédentes, le piston (4), dans un régime de freinage normal, étant disposé à l'intérieur de la chambre de stockage (2) de telle sorte que le deuxième volume de chambre (22) est égal à zéro.

5. Système de freinage hydraulique selon l'une des revendications précédentes, la vanne (17) étant ouverte dans le régime de freinage normal.

6. Système de freinage hydraulique selon l'une des revendications précédentes, la conduite de dérivation (16) comportant un dispositif antiretour (18), lequel contourne la vanne (17) et lequel ouvre un écoulement de fluide dans la direction allant de la deuxième portion de conduite (11b) vers la première portion de conduite (11a) et le bloque dans la direction opposée.

7. Système de freinage hydraulique selon l'une des revendications précédentes, comprenant en outre :

   - un cylindre de frein (15) qui est en liaison fluidique avec la première portion de conduite (11a), et
   - un étrier de frein (13) qui est en liaison fluidique avec la deuxième portion de conduite (11b).

8. Véhicule à deux roues, en particulier bicyclette, de préférence bicyclette électrique, comprenant un système de freinage hydraulique (50) selon l'une des revendications précédentes.

9. Procédé pour faire fonctionner un système de freinage hydraulique (50) selon l'une des revendications 1 à 7, comprenant les étapes suivantes :

   - détection de la pression de cylindre ou de la pression d'étrier au moyen du capteur de pression (35), et
   - détermination de l'autre pression respective sur la base de la pression de cylindre ou de la pression d'étrier correspondante détectée au moyen du capteur de pression (35) et de propriétés mécaniques et/ou géométriques préalablement connues du système de freinage hydraulique (50).

10. Procédé selon la revendication 9, comprenant en outre l'étape suivante :

- réalisation d'un régime antiblocage par fermeture de la vanne (17) dans la conduite de dérivation (16) et actionnement du piston (4) au moyen de l'actionneur (5).

11. Procédé selon la revendication 9 ou 10, comprenant en outre l'étape suivante :

- étranglement contrôlé de la vanne (17) dans la conduite de dérivation (16) pendant l'actionnement des freins par un conducteur, en particulier pendant le régime de freinage normal, afin de limiter de manière commandée un gradient d'établissement de la pression de freinage.

12. Procédé pour faire fonctionner un véhicule à deux roues (100), en particulier une bicyclette, de préférence une bicyclette électrique, qui comprend une unité d'entraînement (105) et un système de freinage hydraulique (50) selon l'une des revendications 1 à 7, comprenant les étapes suivantes :

- génération d'un couple de freinage de moteur au moyen de l'unité d'entraînement (105), et
- génération simultanée d'un couple de freinage au moyen du système de freinage hydraulique (50).

13. Procédé selon la revendication 12, comprenant en outre les étapes suivantes :

- détermination d'une décélération de consigne du véhicule à deux roues (100) sur la base de la pression de cylindre déterminée, et
- détermination d'une décélération maximale du moteur au moyen du couple de freinage de moteur,
- la génération du couple de freinage au moyen du système de freinage hydraulique (50) n'ayant lieu que si la décélération de consigne est supérieure à la décélération maximale du moteur.

Fig. 1

EP 4 565 462 B1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019155371 A1
- DE 102021129246 A1